# EUROPEAN PATENT SPECIFICATION

(11) **EP 4 478 983 B1**
(45) Date of publication and mention of the grant of the patent: **15.07.2026**
(21) Application number: 23717690.4
(22) Date of filing: 16.03.2023
(51) Int. Cl.: A61C 7/08, A61C 7/36

(54) **ORTHODONTIC APPLIANCES**
ORTHODONTISCHE VORRICHTUNGEN
APPAREILS ORTHODONTIQUES

(30) Priority: 17.03.2022 US 202263320733 P
(43) Date of publication of application: 25.12.2024
(73) Proprietor: Ormco Corporation, Brea, CA 92821 (US)
(72) Inventor: SIROVSKIY, Eugene, Castro Valley, California 94546 (US); SHAH, Mithil J., North Hills, California 91343 (US)
(74) Representative: Cleveland Scott York
(86) International application number: PCT/US2023/015350
(87) International publication number: WO 2023/177775

(56) References cited:
- EP-B1- 1 286 627
- US-A1- 2003 198 912
- US-A1- 2021 228 318

## Description

### TECHNICAL FIELD

The present invention relates generally to the field of orthodontic treatment, and more particularly to orthodontic aligners configured to be used in conjunction with an elastic member.

### BACKGROUND

Orthodontics is the practice of manipulating teeth to correct malocclusions between the teeth of the upper and lower dental arches. Typically, treatment of malocclusions includes the use of an orthodontic appliance that applies corrective forces to the teeth. Over time, these corrective forces coerce the teeth to move into their orthodontically correct positions.

Orthodontists may utilize orthodontic appliances referred to as "dental aligners," or simply "aligners" to move teeth. Aligners are generally supplied as a series of removable appliances that incrementally reposition the patient's teeth from their initial orientation to their orthodontically correct orientation. Patients being treated with aligners can insert and remove the aligners at will, and therefore do not need to visit the orthodontist for adjustments. Rather, when the currently worn aligner has moved the teeth to at or near a final orientation for that aligner, the patient merely begins using the next aligner in the series according to a treatment plan.

To fabricate aligners, the orthodontist may first obtain a 3D computer model of the patient's dentition. This model may be generated, for example, by taking an impression of the dentition and scanning the impression into a computer or using an intraoral scanner to directly image the patient's dentition. Once the 3D computer model has been obtained, the orthodontist determines a target orientation of the teeth that provides a corrected dentition. Alternatively, a software algorithm may automatically generate a target orientation of the teeth in accordance with specific programmed criteria. Multiple computer models may then be generated, with each model representing a 3D positive mold of the patient's teeth corresponding to an incremental orientation of the dentition from an initial orientation to a target orientation. The incremental orientations from initial to target orientations may move the patient's teeth according to a proposed treatment plan. Treatment plans typically include numerous stages of movement from an initial orientation to a target orientation of the teeth. Depending on the degree of tooth movement, treatment plans may include a plurality of aligners that are worn in a predetermined sequence from an initial orientation to a final orientation.

The output of the above-described treatment planning process is a series of 3D positive molds of the patient's teeth represented as a series of digital design files. Once the series of 3D molds has been designed, each aligner is fabricated. Fabrication of the aligners typically involves first printing each positive mold of the patient's teeth using an additive manufacturing method and forming plastic sheets over each mold constructed of target orientations of the dentition according to the computer models. After forming, waste material must be trimmed away to produce the aligner. Trimming may utilize CNC milling or another computer controlled cutting system. Additional post processing steps are also performed during printing of individual dental molds and after forming and trimming of the aligner atop a mold.

Aligners may be configured to be used in conjunction with dental attachments, commonly referred to by Orthodontists as "attachments". Attachments are solid objects bonded to a tooth, typically using an adhesive, that protrude outwardly from the tooth. When a dental attachment is used, the dental aligner is fabricated to fit tightly over both the attachment and the corresponding tooth such that the forces on the tooth may be increased. The attachment effectively provides an additional contact point between the aligner and the corresponding tooth from which to create force on the tooth. Among many other benefits, this improved force application allows for better control and predictability of tooth movement as well as decreased treatment times. When used in conjunction with aligner treatment, attachments allow more aggressive treatment plans and the correction of more significant and pronounced dental malocclusions.

Aligners may also be configured to be used in conjunction with an elastic member, such as elastic bands. Elastic bands are configured to permit application of an additional corrective force on the jaw of the patient and can be useful in correcting underbite and overbite. Attachment of an elastic band to an aligner is typically achieved by modifying a gingival edge of the aligner to create an attachment point. For example, the gingival edge may be cut in two locations and the elastic member is then looped through the cuts. An intermediate portion of the aligner is bent outward due to the elastic member. Attaching an elastic member at this location can create problems. First, the increased corrective forces applied to the dental aligner by the elastic member adds stress at the location of the attachment point. The added stress is generally the highest at the cuts. Too much stress for too long at these locations can cause the aligner material to deform and prematurely fail, such as by bending, ripping, and/or tearing. When the aligner fails, the patient must replace the aligner. This prolongs treatment time. Second, cutting the gingival edge of the aligner introduces a defect at or near the gingival edge and so reduces the structural integrity of the aligner, potentially making it less effective than it was designed to be. This may also prolong treatment time because the cut aligners may not be capable of moving teeth according to the designed treatment plan.

Relevant prior art is exemplified by US 2021/228318 A1, EP 1 286 627 B1, and US 2003/198912 A1.

While generally successful, further improvements in dental aligners and in orthodontic treatment are needed.

### SUMMARY

The present invention is defined by claim 1. Preferred embodiments are defined by the dependent claims. A first embodiment of the present invention is an aligner for use in orthodontic treatment of a patient, comprising a hollow shell and a feature. The hollow shell includes a buccal sidewall, an occlusal wall, and a lingual sidewall and defines a plurality of cavities. The plurality of cavities is configured to receive respective ones of the patient's teeth. The sidewalls define a gingival edge that forms an opening in the hollow shell. The feature is positioned on or in at least one of the sidewalls and is spaced apart from the gingival edge, and is configured to receive an elastic member.

A further embodiment of the present invention is an aligner wherein the feature comprises a protrusion in the at least one sidewall and an opening. The protrusion at least partially defines the cavity and is configured to space the sidewall apart from the patient's tooth. The opening is through the sidewall proximate the protrusion or through the protrusion.

A further embodiment of the present invention is an aligner wherein the feature comprises a through-bore in the sidewall. The through-bore includes an edge that defines a shape. In some embodiments, the edge defines a substantially circular shape. In other embodiments, the edge includes at least one substantially linear portion that is most proximal to the gingival edge and is substantially parallel to the gingival edge. In some further embodiments, the edge defines a substantially polygonal shape.

A embodiment of the present invention is an aligner wherein the feature comprises an add-on hook attached on to the sidewall. The add-on hook includes a projection spaced apart from the sidewall thereby defining a recess between the projection and the sidewall. The add-on hook is fabricated separately from the aligner. In some further embodiments, the sidewall comprises a protrusion on which the add-on hook is attached. In some even further embodiments, the protrusion is configured to engage with a dental attachment on the patient's tooth. In some embodiments, the add-on hook may include a retention bump extending toward the recess that is configured to retain the elastic member. In various embodiments, the projection is curved relative to the sidewall.

A further embodiment of the invention is an aligner wherein the aligner is configured to apply a greater repositioning force than the aligner alone to the respective ones of the patient's teeth or the patient's jaw when an elastic member is attached to the feature.

A further embodiment of the invention is an aligner, wherein the feature comprises at least one of (1) a protrusion in the at least one sidewall that at least partially defines the cavity, the protrusion being configured to space the sidewall apart from the patient's tooth, and an opening through the sidewall proximate the protrusion or through the protrusion; (2) a through-bore in the sidewall, wherein the through-bore includes an edge that defines a shape; and (3) an add-on hook including a projection spaced apart from the sidewall thereby defining a recess between the projection and the sidewall, wherein the add-on hook is fabricated separately from the aligner and is attached on to the sidewall. A further embodiment of the invention is an aligner for use in orthodontic treatment of a patient comprising a hollow shell, a feature, and an elastic member. The hollow shell includes a buccal sidewall, an occlusal wall, and a lingual sidewall and defines a plurality of cavities to receive respective ones of the patient's teeth. The sidewalls define a gingival edge that forms an opening in the hollow shell. The feature is positioned on or in the at least one of the sidewalls and is spaced apart from the gingival edge. The elastic member is configured to attach to the feature. In some embodiments, the elastic member is attached to the feature using a lark's head knot. In various embodiments, the elastic member comprises a hook that attaches the elastic member to the feature. In some further embodiments, the hook includes a retention bump and the feature includes a retention bump receptacle, wherein the retention bump is configured to be received by the retention bump receptacle when the elastic member is attached to the feature by the hook.

### BRIEF DESCRIPTION OF THE DRAWINGS

The accompanying drawings, together with the general description of the invention given above, and the detailed description given below, serve to explain the invention. Similar reference numerals are used to indicate similar features throughout the various figures of the drawings.
FIG. 1 is a perspective view of an aligner with an attached elastic member relative to a patient's dentition in accordance with one example which is not part of the present invention.
FIG. 2 is an enlarged perspective view of the aligner of FIG. 1.
FIG. 3A is a cross-sectional view of the aligner shown in FIG. 2 taken along section line 3-3 on a tooth on a patient's lower jaw together with a cross-sectional view of an aligner on a tooth on the patient's upper jaw.
FIG. 3B is a cross-sectional view of the aligner on a tooth on a patient's lower jaw together with a cross-sectional view of an aligner on a tooth on the patient's upper jaw in accordance with one example which is not part of the invention.
FIG. 4 is an enlarged perspective view of an aligner with an attached elastic member relative to a patient's dentition in accordance with one example which is not part of the invention.
FIG. 5 is a cross-sectional view of the aligner shown in FIG. 4 taken along section line 5-5 on a tooth on a patient's lower jaw together with a cross-sectional view of an aligner on a tooth on the patient's upper jaw.
FIG. 6A is a cross-sectional view of the aligner on a tooth on a patient's lower jaw together with a cross-sectional view of an aligner on a tooth on the patient's upper jaw in accordance with one embodiment of the invention.
FIG. 6B is a cross-sectional view of the aligner on a tooth on a patient's lower jaw together with a cross-sectional view of an aligner on a tooth on the patient's upper jaw in accordance with one embodiment of the invention.
FIG. 6C is a cross-sectional view of the aligner on a tooth on a patient's lower jaw together with a cross-sectional view of an aligner on a tooth on the patient's upper jaw in accordance with one embodiment of the invention.
FIG. 7A is a cross-sectional view of the aligner on a tooth on a patient's lower jaw together with a cross-sectional view of an aligner on a tooth on the patient's upper jaw in accordance with one example which is not part of the invention.
FIG. 7B is a cross-sectional view of the aligner on a tooth on a patient's lower jaw together with a cross-sectional view of an aligner on a tooth on the patient's upper jaw in accordance with one example which is not part of the invention.

### DETAILED DESCRIPTION

Embodiments of the invention are directed to an aligner including a feature on or in at least one of a lingual sidewall or a buccal sidewall (also referred to as a labial sidewall herein) at which an elastic member may be attached to the aligner. Advantageously, with the attached elastic, embodiments of the aligner improve the range of forces available for application during orthodontic treatment without sacrificing the structural integrity of the aligner. This is achieved by avoiding modification of a gingival edge of the aligner. The feature that receives the elastic member is spaced apart from the gingival edge and so avoids negatively affecting the structural integrity of the aligner while still providing a location at which an elastic member may be secured. In other words, aligners according to embodiments of the invention lack modification of the gingival facing edge of the aligner during manufacturing or immediately prior to treatment (e.g., by the orthodontist or clinician, such as by cutting the gingival edge with a pair of scissors). An elastic member may be secured to the aligner at the location of the feature and so may be utilized to add specific forces (e.g., translational) to the patient's jaw that would otherwise be unavailable in the absence of the elastic member. This may be achieved without premature failure of the aligner. Application of forces through the elastic are transferred to the aligner at a location and will not degrade the structural integrity of the aligner for the period of use of that aligner. Because each aligner is essentially customized to the patient's teeth in a particular pre-planned orientation, the location at which a feature may be formed may vary according to the forces needed during treatment. In the figures below, exemplary embodiments of the invention are shown in which the feature permits an elastic member to be secured to the aligner.

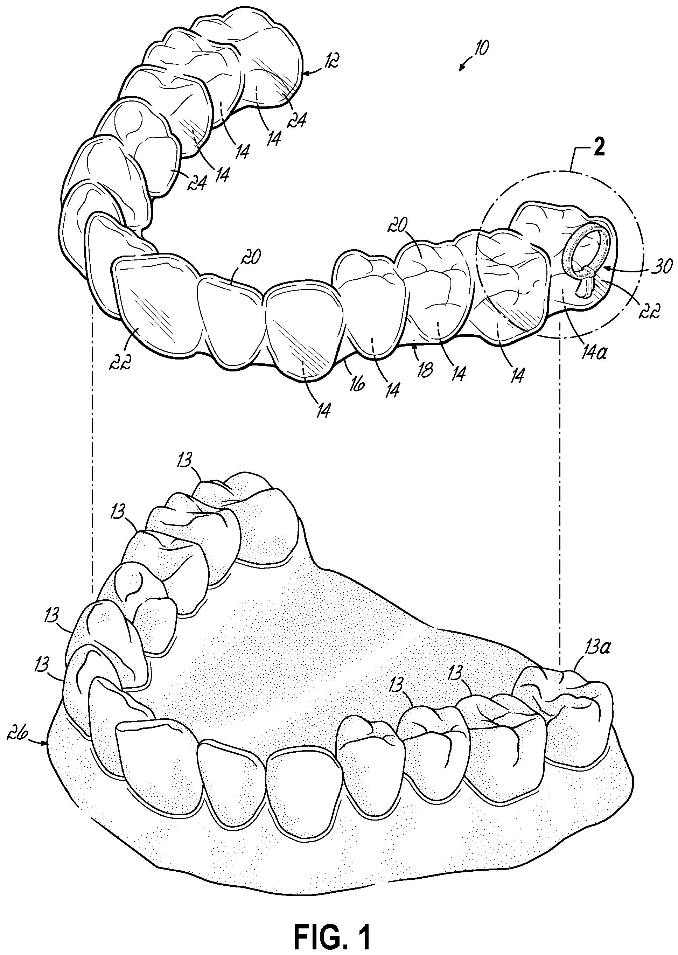

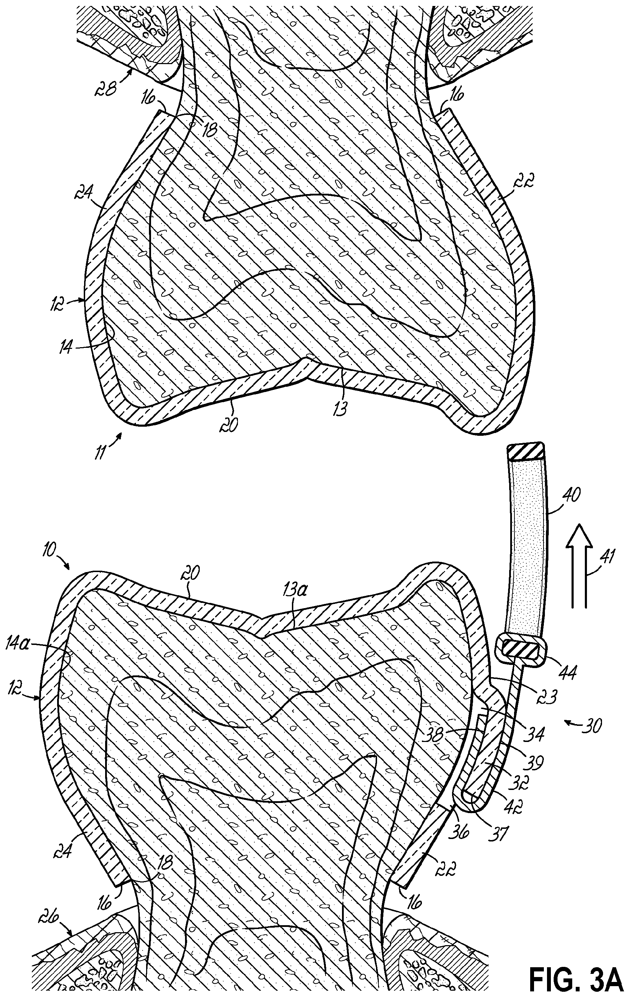

To these and other ends, referring to FIGS. 1-7B, aligners 10, 11 each includes a hollow shell 12 that is configured to encapsulate a crown of one or more teeth 13 of a patient's dentition. For each aligner 10, 11, the shell 12 is formed with a plurality of cavities 14 that collectively define a gingival edge 16. The gingival edge 16 defines an opening 18 in the hollow shell 12. Each aligner 10, 11 further includes an occlusal wall 20, a buccal sidewall 22, and a lingual sidewall 24. The shell 12 may be an elastic material, such as a thermoplastic, in one or more layers. As shown in FIGS. 3A, 3B, and 5-7B, during treatment, aligners 10, 11 are worn on a patient's mandible jaw 26 and maxillary jaw 28, respectively. Referring again to FIGS. 1-7B, each cavity 14 is shaped to receive a specific tooth 13 on the respective jaw 26, 28 through the opening 18. Embodiments of the invention are not limited to use on both mandible and maxillary jaws. Specifically, embodiments of the invention may be worn on the upper jaw, the lower jaw, or both the upper and lower jaw. Any reference to a particular jaw or an aligner to be used with a specific jaw is merely for convenience of description unless stated otherwise.

With further reference to FIGS. 1-7B, during orthodontic treatment, each aligner 10, 11 is configured to be selectively positionable over one or more of the patient's teeth 13 and may fit tightly at least in part due to slight differences in the position of one or more cavities 14 relative to the corresponding tooth 13. A set of aligners (not shown) may include one or more aligners 10, 11 for use in series. Each aligner 10, 11 in the set may differ so that each applies an incremental corrective force to the patient's dentition sufficient to cause movement of one or more of the patient's teeth 13 through incremental positions from a starting position to an end position. Cumulatively, the individual movements of one or more of a patient's teeth 13 that results from the use each aligner 10, 11 in series may result in complete treatment of the patient's malocclusion.

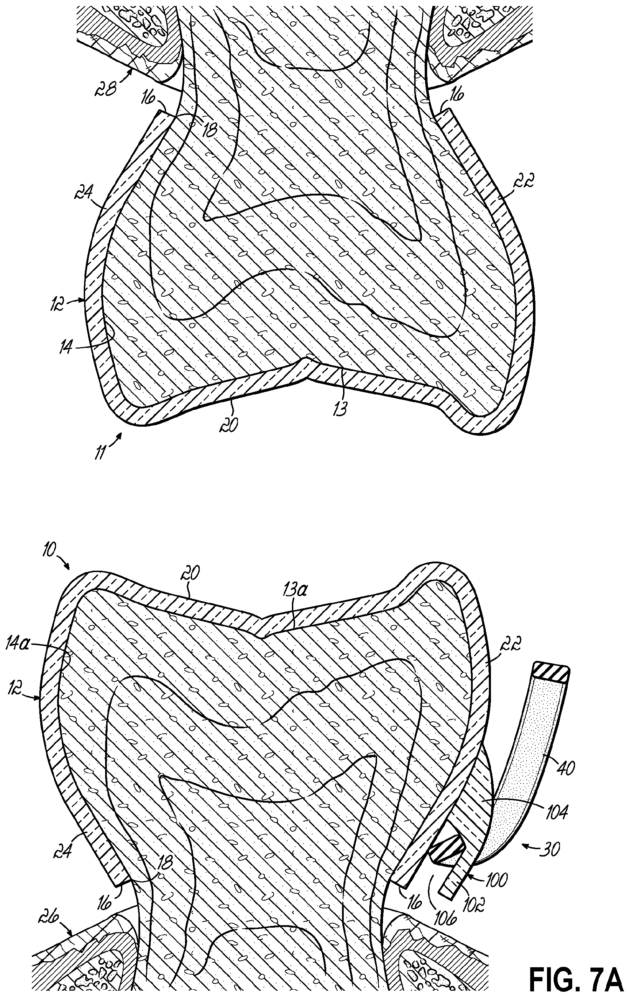

With continued reference to the exemplary embodiment shown in FIGS. 1-7B, a feature 30 is located on or in the buccal sidewall 22 of the aligner 10. Although embodiments of the invention and examples shown in FIGS. 1-7B demonstrate features located on or in the buccal sidewall 22, any reference to a feature on or in the buccal sidewall 22 is merely for convenience of description may be placed on or in the lingual sidewall 24. To place the feature 30 on or in the buccal sidewall 22, the doctor or orthodontist first selects a particular tooth 13a. Then, the doctor or orthodontist determines the vector of force and amount of movement that they want that tooth 13a or the patient's jaw 26, 28 to move. The placement of the feature may be determined based on clinical considerations including, but not limited to, design, structural integrity of the feature 30 or aligner 10, and forces applied to the patient's tooth 13a or patient's jaw 26 (including but not limited to tangential forces). For example, with reference to FIG. 3A, the more occlusally offset the feature 30 is from the gingival edge 16, the more tangential force 41 is created when an elastic 40 is attached (discussed further below). As shown in the exemplary embodiment of FIGS. 1-3B, the feature 30 is located on the buccal sidewall 22 of the cavity 14a corresponding to the particular tooth 13a. While the feature 30 forms a portion of the cavity 14a for a particular tooth 13a, the feature 30 may be formed on the buccal sidewall 22 of any single one or multiple cavities 14 for the remaining teeth 13. Embodiments of the invention are not limited to a single feature 30 on the cavity 14a as shown. That is, multiple features 30 may be formed on or in the buccal sidewall 22 depending on available space and clinical considerations.

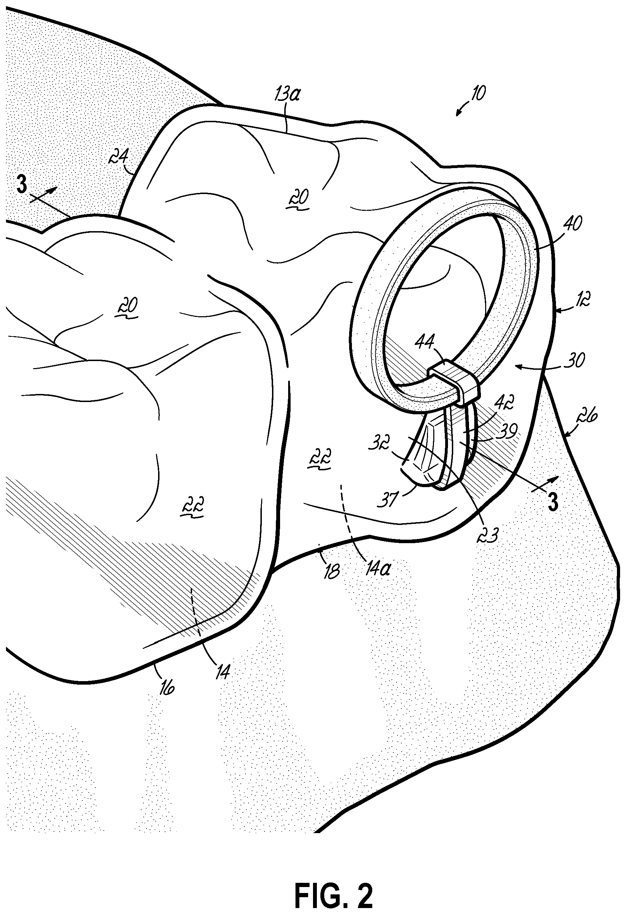

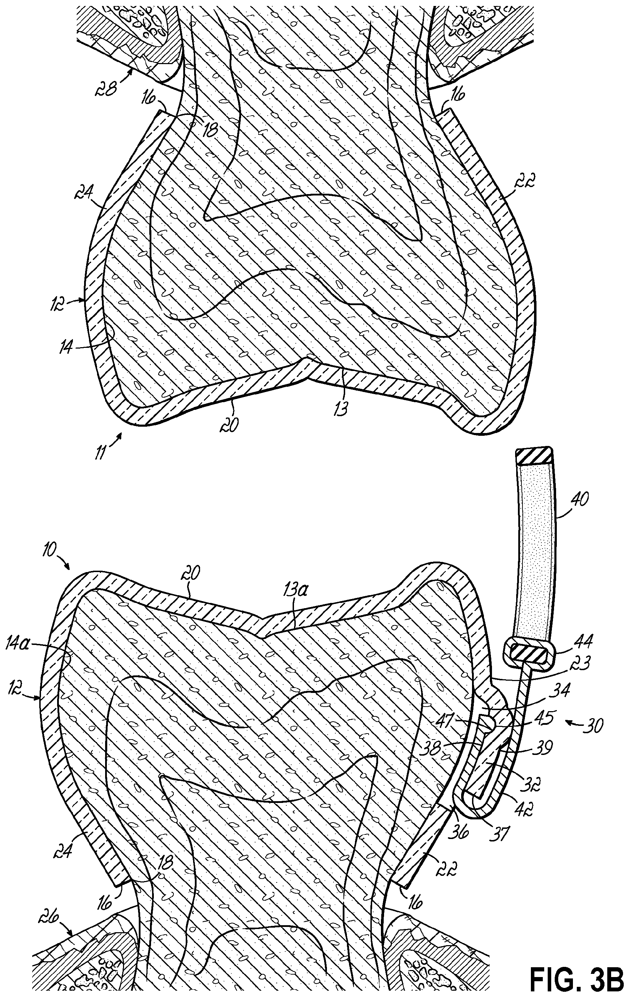

With further reference to FIGS. 2-3B, an exemplary feature 30 includes a buccally extending protrusion 32 in the buccal sidewall 22. The protrusion 32 forms a portion of the sidewall 22 but projects outwardly relative to a surrounding portion 23 of the sidewall 22 that forms the cavity 14a. With this configuration, the protrusion 32 may appear as a bulge in the sidewall 22. The shape of the bulge or the protrusion 32 does not conform with the surface of the tooth. The protrusion 32 is formed of the same thickness material as the surrounding portion 23 but is spaced buccally apart from the tooth surface. This arrangement results in a space 34 (i.e., gap) being formed between the tooth 13a and the protrusion 32. As shown in FIGS. 3A and 3B, an opening 36 formed through the sidewall 22 intersects the space 34. The opening 36 in the sidewall 22 is located proximate a periphery edge 37 of the protrusion 32, such as at a gingival portion of the protrusion 32. In such an embodiment, the opening 36 is therefore positioned between the protrusion 32 and the edge 16 of the shell 12. In the example, the opening 36 is oriented in a substantially labial-lingual direction and so is accessible from the labial direction when the aligner 10, 11 is worn. Embodiments are not limited to the location of the opening 36 relative to the protrusion 32 as shown. For example, and although not shown, the opening 36 may be located substantially on a mesial portion (i.e., positioned between individual cavities), a distal portion (i.e., also positioned between individual cavities), or on an occlusal portion (i.e., between the protrusion 32 and the occlusal wall 20) of the protrusion 32.

The protrusion 32 may be formed in various ways. For example, the protrusion 32 may be formed by fabricating the aligner 10 over a mold of a patient's teeth that includes an artificially built-up feature on one or more 3D printed structures in the shape of the desired protrusion 32. This can be accomplished by designing a structure on one or more of the 3D modeled teeth in software, which will be printed on the mold of the patient's teeth when the mold is printed using an additive manufacturing method. The result is that when raw aligner material is thermoformed on top of such a mold to form aligner 10, the artificially built-up feature will be reflected in the aligner 10. Since the designed structure does not reflect an actual part of the patient's tooth, the space 34 (i.e., a "gap") will result at the location of the structure when the formed aligner 10 is worn by the patient. In this way, the protrusion 32 may have the same thickness as the sidewall 22. Another way of forming the protrusion 32 is to add extra material to the portion of the sidewall 22 at which the protrusion 32 is formed. This adds to the through-thickness of the sidewall 22. The extra material can be removed from the portion of the sidewall 22 proximal to the cavity 14a to create the space 34 using a conventional means of removing materials. The placement of the protrusion 32 may be determined based on clinical considerations including, but not limited to, design and forces applied to the patient's tooth 13a or patient's jaw 26 (including but not limited to tangential forces such as tangential force 41 shown in FIG. 3A). For example, the more occlusally offset the protrusion 32 is from the gingival edge 16, the more tangential force is created when the elastic 40 is attached. The opening 36 may be formed in various ways as well. Alternatively, the opening 36 may be formed by removing a portion of the protrusion 32 using a conventional means of removing material. Conventional means of removing materials include, but are not limited to, hole punching, drilling, cutting, puncturing, boring, end milling or other similar methods (not shown).

During use and with reference to the exemplary embodiment shown in FIGS. 3A and 3B, the protrusion 32 has an internal surface 38 proximal to the space 34 and an external surface 39 opposite from the internal surface 38. In the exemplary embodiment, the space 34 formed by the protrusion 32 receives a hook 42. As shown, the hook 42 includes a connection 44 at which the hook 42 is coupled to the elastic member 40. The connection 44 may be configured to be removably coupled to the elastic 40. A portion of the hook 42 is received by the space 34 and may contact a portion of the internal surface 38. The hook 42 may not contact the tooth 13a during treatment and, depending on the treatment and material of the hook 42, it may be preferable that the hook 42 not be in a position in which the hook 42 contacts the tooth 13a during treatment. Another portion of the hook 42 is in contact with a portion the external surface 39 of the protrusion 32. In this way, the elastic 40 attaches to the aligner 10 at the protrusion 32 via the hook 42 as shown in FIGS. 1-3B. The elastic 40 may have a closed-loop configuration. The elastic 40 may be, but is not limited to, an o-ring including a rubber-like elastic polymer or any other continuous band including a suitable rubber-like elastic that can be coupled to the hook 42. The elastic member 40 may not be a continuous band. In some embodiments, a spring may be used in place of the elastic member 40 shown. It is contemplated that the spring would be capable of creating a tensile force similar to a rubber or rubber-like polymer. The tensile force applied by the elastic member 40 or other clinical considerations may affect the location the orthodontist chooses to place the feature 30. In some embodiments, the feature 30 or the protrusion 32 is positioned such that the elastic 40 is not visible when the aligner 10, 11 is worn by the patient. Advantageously, the hook 42 is securely attached to the aligner 10 at a location spaced apart from the gingival edge 16 of the aligner 10. Thus, forces produced by the elastic 40 when it is elastically stretched, such as when it is stretched and attached at another position in the patient's mouth, are transferred to the sidewall 22 via the protrusion 32 and are efficiently and safely distributed to the aligner 10. Additionally, the forces produced by the elastic member 40 are distributed in an area around the protrusion 32 thereby avoiding subjecting the edge 16 or any portion thereof to direct loads from the stretched elastic 40. In this way, treatment of the patient's malocclusion may be hastened or otherwise improved with a decreased risk premature failure of the aligner 10, 11 at or near the gingival edge 16 due to the added loading.

With reference to FIG. 3B, the hook 42 may further include a retention bump 45 and the protrusion 32 may further include a retention bump receptacle 47 configured to receive the retention bump 45 when the hook 42 is received in opening 36 of the protrusion 32. In such an embodiment, the hook 42 may be more stably retained in the cavity 14a when the retention bump 45 is received in the retention bump receptacle 47.

Embodiments are not limited to an elastic member 40 attached to the aligner 10 at the protrusion 32 via a hook 42. Although not shown, the aligner 11 may include a protrusion configured to attach to the elastic 40 as described above. Further, multiple hooks are contemplated. In some such embodiments, the elastic member 40 is coupled to a plurality of hooks 42 by which the elastic 40 may be attached to both aligners 10, 11 at the protrusion 32 and at a second protrusion respectively as described above. In this way, the elastic member 40 may be stretched between aligners 10, 11 so that additional forces may be applied to one or more teeth 13 on both the mandible jaw 26 and the maxillary jaw 28.

Moreover, embodiments are not limited to a single protrusion 32 per aligner. In that regard, both of the aligners 10, 11 may include a plurality of protrusions 32 as described above, and each of a plurality of the elastic members 40 may be attached to a protrusion 32 on both of the aligners 10, 11 via a plurality of hooks 42 (not shown). In this way, additional forces may be applied to the patient's jaws 26, 28. Treatment of the patient's malocclusion may be further hastened or otherwise further improved by the use of the elastic 40 to apply a greater corrective force to the patient's dentition or additional corrective forces to the patient's dentition as disclosed above.

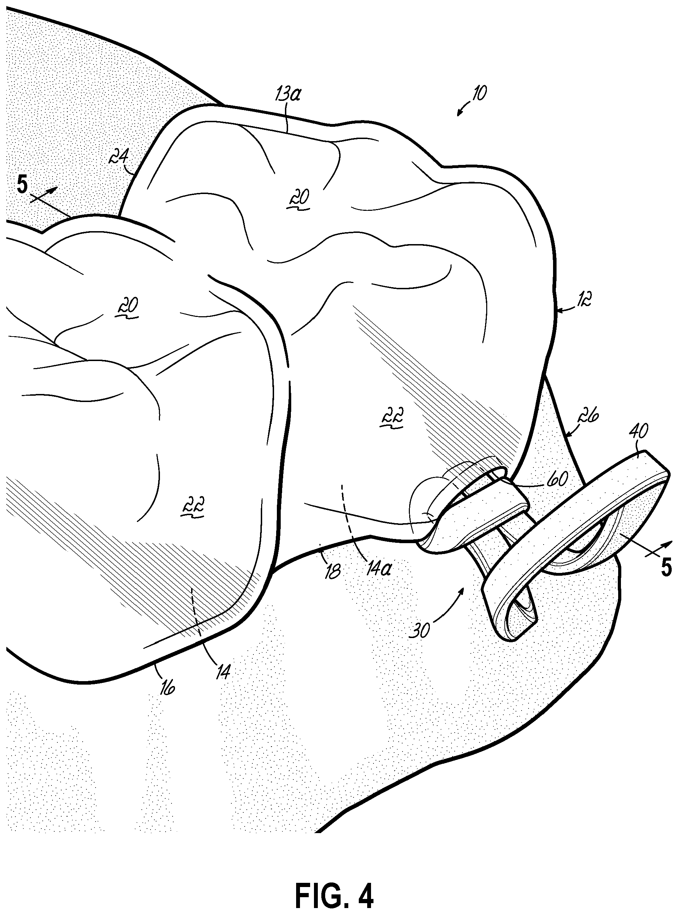

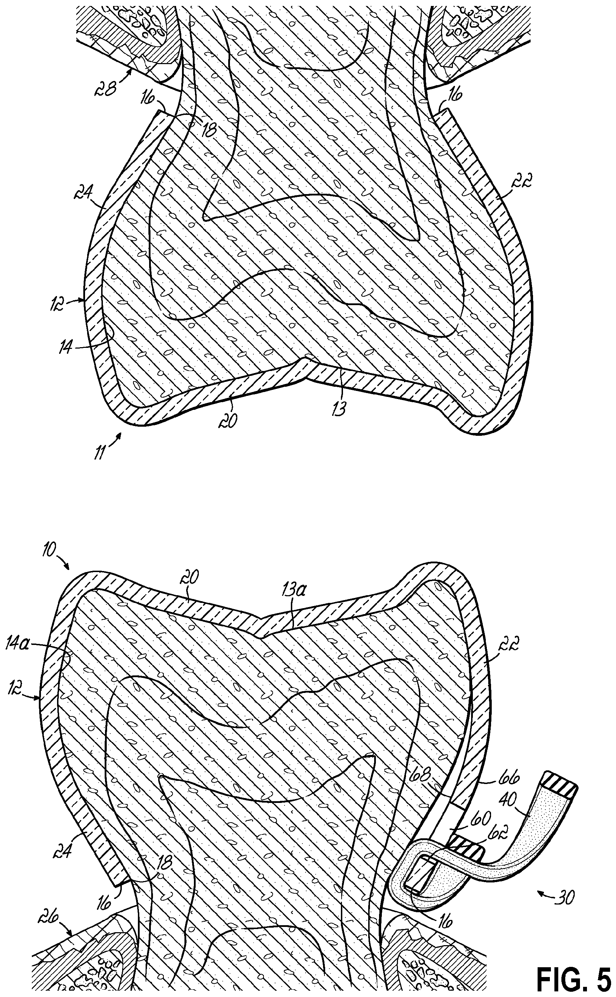

Referring now to FIGS. 4 and 5, the feature 30 of the aligner 10 may include a through-bore 60. The through-bore 60 extends from an external surface 66 of the sidewall 22 to an internal surface 68 of the sidewall 22 and so opens to the cavity 14a configured to receive the tooth 13a. In such embodiments, no protrusion is formed in the sidewall 22, as is shown in FIGS. 1- 3B. In that regard, the through-bore 60 receives the elastic member 40 without the aid of hook 42. Therefore, the size of the through-bore 60 is related to a thickness dimension of the elastic member 40. In the exemplary embodiment shown, the through-bore 60 is a circular hole that is slightly larger than twice the diameter of the elastic member 40. The through-bore 60 may be formed in the aligner 10 by removing a portion of the sidewall 22, including but not limited to hole punching, drilling, cutting, piercing, puncturing, boring, end milling, or other similar methods. Embodiments which are not part of the invention are not limited to a single through-bore in an aligner as a plurality of through-bores 60 may be formed in the aligner 10, 11.

The size and location of the through-bore 60 are selected to avoid significant stress at the edge 16 of the shell 12 and to allow for the elastic 40 to attach to the through-bore 60 (described below). As such, the through-bore is spaced apart from the edge 16 toward the occlusal wall 20. The placement of the through-bore 60 may be determined using clinical considerations, including but not limited to design, structural integrity of the aligner, and forces applied to the patient's tooth 13a or jaw 26 (including but not limited to tangential forces such as tangential force 41 shown in FIG. 3A) when the elastic 40 is attached. For example, the more occlusally offset the through-bore 60 is from the gingival edge 16, the more tangential forces are created when the elastic 40 is attached. The distance of the through-bore 60 from the gingival edge 16 of the aligner may be related to the magnitude of the force anticipated to be applied via the elastic member 40 during treatment. As the anticipated force increases, the through-bore 60 may be moved further away from the gingival edge 16.

The through-bore 60 includes a through-bore edge 62 that defines a shape in the sidewall 22. As shown, the edge 62 defines a substantially circular through-bore 60. However, embodiments which are not part of the invention are not limited to circular through-bores 60 such as that shown. A portion of the edge 62 may be substantially parallel to gingival edge 16 (not shown). In some such embodiments of the invention, the portion of edge 62 that is substantially parallel to gingival edge 16 is also the most proximal portion of the through-bore 60 to edge 16 (not shown). In that regard, the through-bore edge 62 may define a polygonal shape such as, but not limited to, a triangular, square, hexagonal, octagonal, or other suitable polygonal shape. Further, the through-bore edge may define an irregular shape, such as a substantially semi-circular shape (not shown). In some further embodiments of the semi-circularly shaped through bore edge, the semi-circular shape resembles a capital letter "D" rotated ninety degrees counterclockwise.

In the exemplary embodiment shown, the elastic member 40 is tied directly to the aligner 10 via the through-bore 60. As shown, the elastic member 40 passes through the bore 60 and is wrapped around the gingival edge 16. The elastic 40 may be a continuous band tied to the aligner 10 using the lark's head knot (also known as the cow hitch knot). The elastic member 40 may be tied to the aligner 10 by looping one end of the elastic band 40 around edge 16, internal surface 68, and edge 62. Opposing loops in ends of the elastic band 40 may be tied by pulling one loop (i.e., one end) of the elastic band 40 through the opposing loop (i.e., the other end) of the elastic band 40 until the knot is taut. In this way, the elastic 40 attaches to the aligner 10 at the through-bore 60 as shown in FIGS. 4 and 5. Although not shown, other conventional knots for attaching a cord to another object can be used, including but not limited to the reverse lark's head knot, the clove hitch, the constrictor knot, the half-hitch knot, or other similar knots. Embodiments of the invention are not limited to use with elastic members that are continuous bands. By way of example and not limitation, the elastic member 40 may be a single strand of elastic material that may be tied to the aligner 10 via the through-bore 60. When attached, forces produced by the elastic member 40 when it is stretched, such as when it is attached to a separate location at another position in the patient's mouth, are transferred to the sidewall 22 and are efficiently and safely distributed to the aligner 10. Moreover, the through-bore 60 is positioned such that the portion of the edge 16 where the elastic 40 applies force has a greater structural strength than conventional aligners that have elastic members attached to a portion of the edge 16. Although not shown, the aligner 11 may include a through-bore configured to attach to the elastic 40 as described above. The elastic 40 may therefore be tied to both aligners 10, 11 and be stretched between them so that additional forces may be applied to one or more teeth 13 on both the mandible jaw 26 and the maxillary jaw 28. In this way, the location, design, and application of the through-bore 60 allows an elastic 40 to provide continual application of force during treatment of the patient's malocclusion without subjecting the aligner 10, 11 to force at the gingival edge 16 sufficient to substantially deform the aligner 10, 11.

Embodiments of the invention are not limited to the elastic member 40 being tied to one or both aligners 10 and 11 between the through-bore 60 and the edge 16. For example, both the aligners 10, 11 may include a plurality of through-bores 60 as described above. In this way, a plurality of the elastic members 40 may be tied to a through-bore 60 on both aligners 10, 11. In this way, additional forces may be applied to the patient's jaws 26, 28. Treatment of the patient's malocclusion may be further hastened or otherwise further improved by the use of an elastic 40 to apply a greater corrective force to the patient's dentition or additional corrective forces to the patient's dentition as disclosed above.

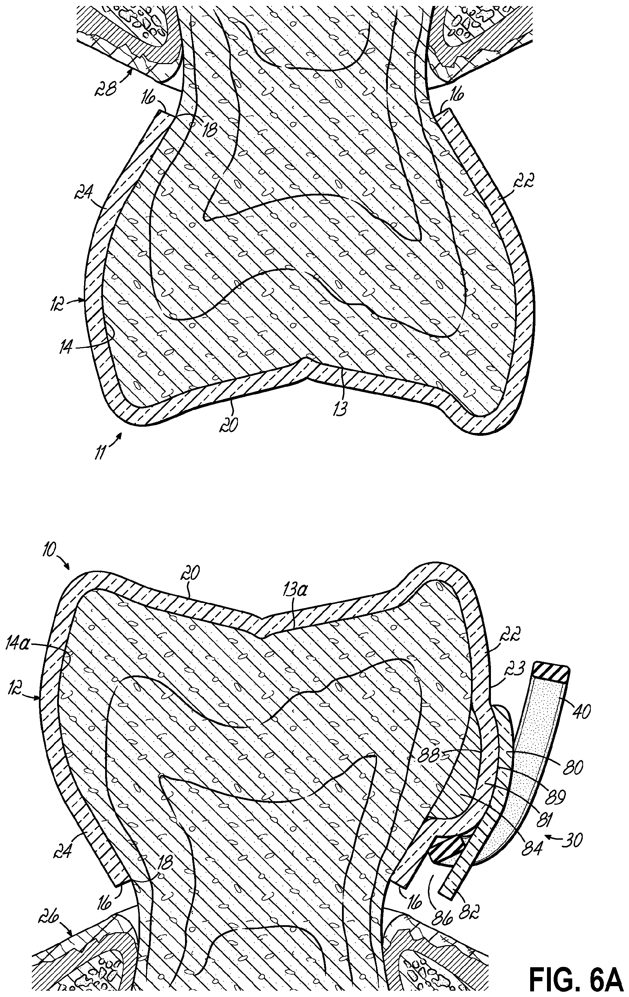

Referring now to FIGS. 6A-6C, in the embodiments shown, the feature 30 includes a buccally extending protrusion 81 in the buccal sidewall 22 in combination with an add-on hook 80. As shown, the hook 80 is attached on to an external surface the buccal protrusion 81. The hook 80 is a separate component that may be attached to the protrusion 81 using an adhesive selected from a group including, but not limited to, an ultraviolet activated adhesive or a time activated adhesive. In other embodiments, the add-on hook 80 is a separate component that is welded to the sidewall 22 using a method including, but not limited to, laser welding. The hook 80 is formed without penetrations into or through the shell 12. The placement of the protrusion 81 and the hook 80 may be determined based on clinical considerations including, but not limited to, design and forces applied to the patient's tooth 13a or patient's jaw 26 (including but not limited to tangential forces such as tangential force 41 shown in FIG. 3A). For example, the more occlusally offset the protrusion 81 and add-on hook 80 are from the gingival edge 16, the more tangential force is created when the elastic 40 is attached.

A portion of the hook 80 extends beyond a perimeter of the buccal protrusion 81 to form at least one projection 82. The projection 82 is therefore a result of a mismatch in position and/or size between the hook 80 and the protrusion 81 at the perimeter of buccal protrusion 81. The protrusion 81 extends buccally away relative to surrounding portions of the sidewall 22 such that the projection 82 is spaced from the sidewall 22 to create a recess 86. In the exemplary embodiments shown, the projection 82 extends substantially parallel to the buccal sidewall 22 from the buccal protrusion 81 and is pointed in substantially gingival direction (i.e., toward the edge 16) from the protrusion 81 and so is between the edge 16 and the protrusion 81. However, embodiments are not limited to the position shown. For example, the projection 82 may extend distally, mesially, or occlusally from the protrusion 81 with the elastic member 40 being stretched in generally the opposite direction when attached as described below. This ensures that the elastic member 40 remains securely attached to the aligner 10 when the elastic member 40 is stretched during use. In some embodiments, the projection 82 is curved concavely relative to the buccal sidewall 22 while the add-on hook is attached to the buccal protrusion 81 (not shown).

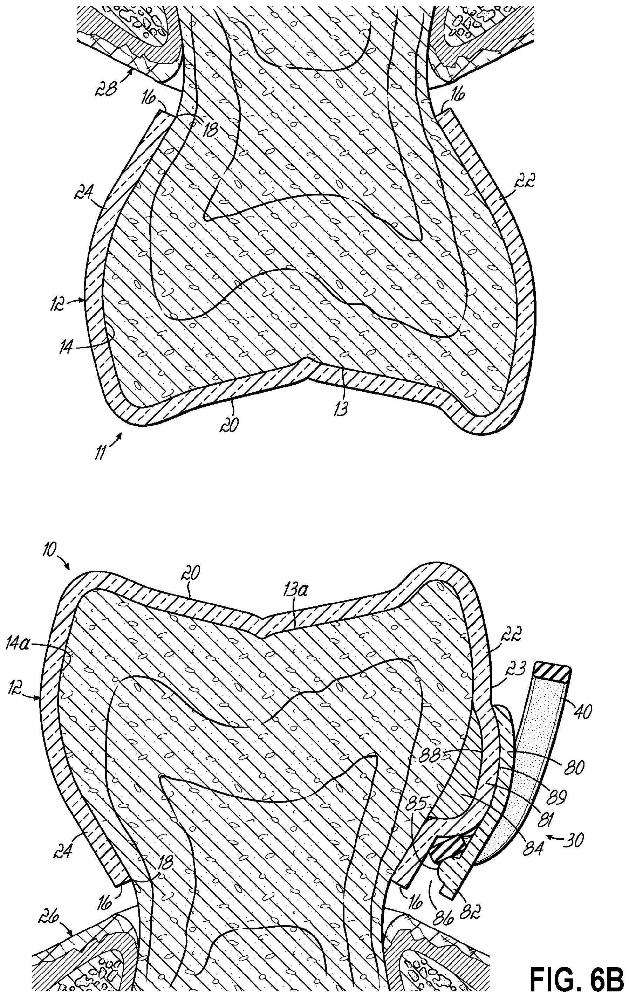

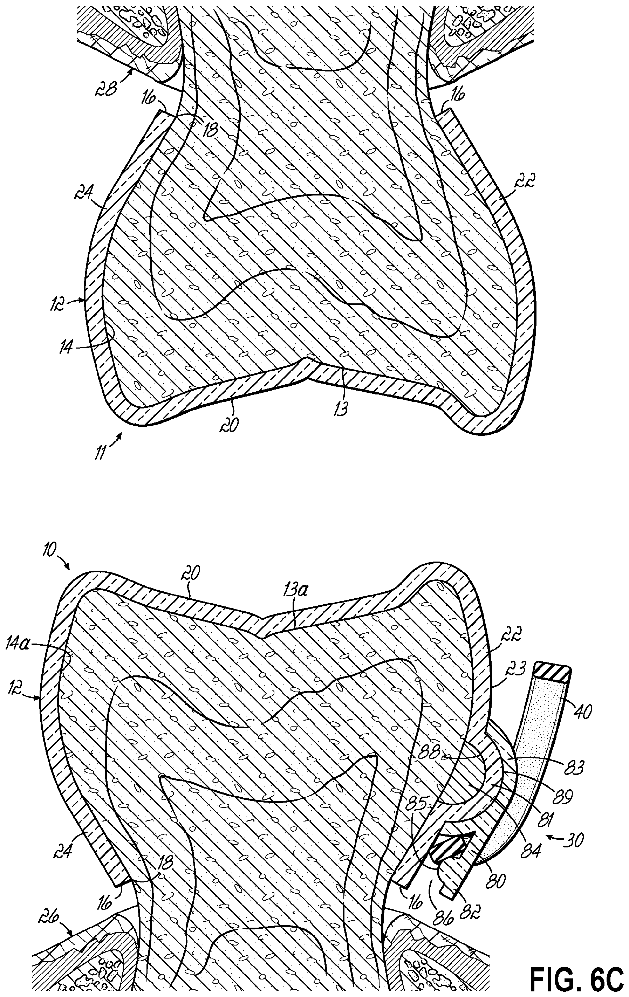

With reference to FIGS. 6B and 6C, the buccal projection 82 may include a retention bump 85 that extends from the projection 82 toward the recess 86. In such embodiments, the retention bump 85 may be configured to enable secure attachment of the elastic 40 to the aligner 10 between the protrusion 81 and the retention bump 85.

With further reference to FIGS. 6A-6C, the buccal protrusion 81 may be formed to engage with a dental attachment 84 that is bonded to the patient's tooth. In such embodiments, the protrusion 81 has an internal surface 88 proximal to the dental attachment 84 and an external surface 89 opposite from the internal surface 38. The dental attachment 84 may be bonded to the tooth 13a of the patient using a conventional attachment method. In some embodiments, the buccal protrusion 81 is configured such that the internal surface 88 comes into contact with the dental attachment 84 while the aligner 10 is in use.

With reference to FIG. 6C, the add-on hook 80 may be shaped like a scoop with a handle such that the scoop is configured to cover the protrusion 81 and handle forms the projection 82. As shown in the exemplary embodiment, the attachment 84, and consequently the protrusion 81, are shaped like hemispheres. The protrusion 81 and the add-on hook 80 may be standardized to fit together. This may be accomplished, for example and without limitation, by fabricating the portion of the add-on hook 80 that covers the protrusion 81 (i.e., the scoop) to have a relative size and shape configured to receive the protrusion 81.

With reference to FIGS. 6A-6C, embodiments are not limited to a buccal protrusion 81 that engages with a dental attachment. For example, the aligner 10 may include a solid buccal protrusion 81 (not shown). That is, the portion of the shell 12 increases in thickness to define the protrusion 81.

Although not shown, the protrusion 81 may be formed in various ways. For example, the protrusion 81 may be formed by fabricating the aligner 10 over a mold of a patient's teeth that includes an artificially built-up feature on one or more 3D printed structures in the shape of the desired protrusion 81. This can be accomplished by designing a structure on one or more of the 3D modeled teeth in software, which will be printed on the mold of the patient's teeth when the mold is printed using an additive manufacturing method. The result is that when raw aligner material is thermoformed on top of such a mold, the artificially built-up feature will be reflected in the aligner 10 formed. Since the designed structure is artificial and does not form an actual part of the patient's tooth, a "gap" will result at the location of the structure when the aligner 10 is applied to the patient's teeth 13 (i.e., worn by the patient). In this way, the protrusion 81 may have the same thickness as the sidewall 22 and the protrusion 81 may be configured to engage with a dental attachment 84. Another way of forming the protrusion 81 is to add extra material to the portion of the sidewall 22 at which the protrusion 81 is formed (not shown). In embodiments where the protrusion 81 is configured to engage with the dental attachment 84, excess material can be removed from the portion of the sidewall 22 proximal to the cavity 14a using a conventional means of removing materials including, but not limited to, hole punching, drilling, cutting, puncturing, boring, end milling, or other similar methods (not shown).

As shown, the elastic 40 is attached to the add-on hook 80 when a portion of the elastic 40 is received in the recess 86 and another portion of the elastic 40 is extended in a direction generally opposite the projection 82. Advantageously, the elastic 40 is securely attached to the hook 80 at a location spaced-apart from the edge 16 of the aligner 10. Thus, forces produced by the elastic 40 when it is elastically stretched, such as when it is attached to a separate location at another position in the patient's mouth, are transferred to the sidewall 22 via the hook 80 and are efficiently distributed to the aligner 10. Additionally, the forces produced by the elastic member 40 are distributed in an area around the hook 80 thereby avoiding subjecting the edge 16 or any portion thereof to direct loads from the stretched elastic 40. In this way, treatment of the patient's malocclusion may be hastened or otherwise improved by the use of the elastic 40 with a decreased risk premature failure of the aligner 10, 11 at or near the gingival edge 16 due to the added loading.

Embodiments of the invention are not limited to the elastic 40 being attached to a single add-on hook 80 of aligner 10. Although not shown, the aligner 11 may include an add-on hook configured to attach to the elastic 40 as described above. In some such embodiments, the elastic 40 may be attached to the hook 80 on aligner 10 and a second hook on aligner 11. In this way, the elastic 40 may be stretched between aligners 10, 11 so that additional forces may be applied to one or more teeth 13 on both the mandible jaw 26 and the maxillary jaw 28. Embodiments are not limited to a single add-on hook 80 per aligner. In that regard, both the aligners 10, 11 may include a plurality of hooks 80 as described above, and each of a plurality of the elastic members 40 may be attached to an add-on hook 80 on both the aligners 10, 11 (not shown). In this way, additional forces may be applied to the patient's jaws. Treatment of the patient's malocclusion may be further hastened or otherwise further improved by the use of an elastic 40 to apply a greater corrective force to the patient's dentition or additional corrective forces to the patient's dentition as disclosed above.

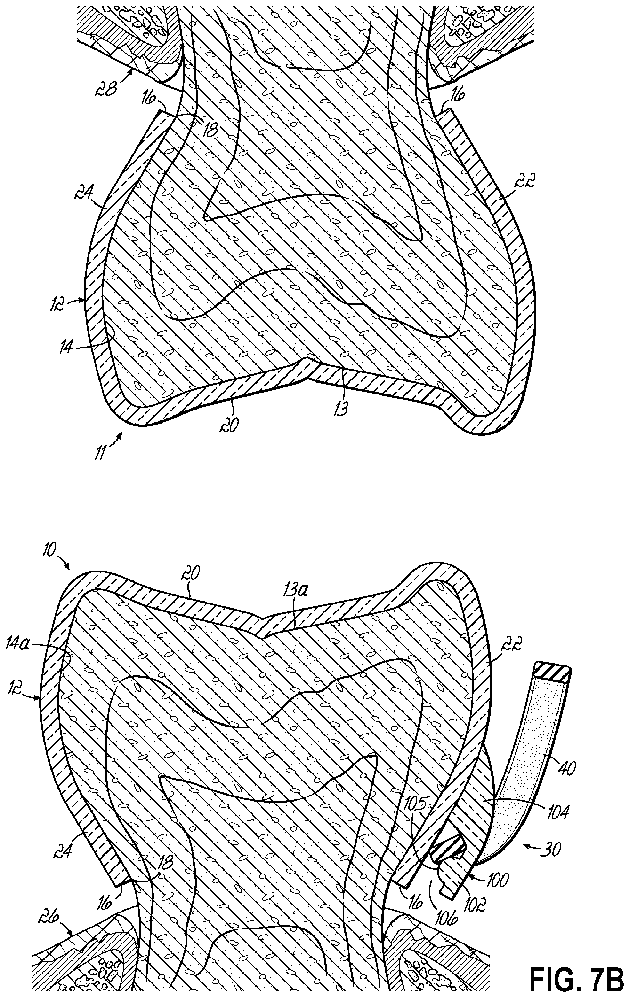

Referring now to FIGS. 7A and 7B, in one exemplary embodiment, the feature 30 of the aligner 10 may include an add-on hook 100 on the buccal sidewall 22 that differs in configuration than the add-on hook 80 of FIGS. 6A-6C. As shown, the hook 100 may be attached to the sidewall 22 at locations without the protrusion 32 (FIGS. 1-3B) or without the protrusion 81 (FIGS. 6A-6C). The hook 100 has a projection 102 extending from a main body 104. As shown, the body 104 may attached to the sidewall 22 at a location spaced apart from the edge 16. The add-on hook 100 may be attached to the aligner 10 at the sidewall 22 using an adhesive including, but not limited to, an ultraviolet activated adhesive or a time activated adhesive. In some embodiments, the add-on hook 100 is welded to the sidewall 22 using a method including, but not limited to, laser welding. The placement of the hook 100 may be determined based on clinical considerations including, but not limited to, design and forces applied to the patient's tooth 13a or the patient's jaw 26 (including but not limited to tangential forces such as tangential force 41 shown in FIG. 3A). For example, the more occlusally offset the hook 100 is from the gingival edge 16, the more tangential force is created when the elastic 40 is attached.

As shown, the projection 102 extends from the body 104 so that, in cross-section, the feature 30 has a dog-legged shape with the projection 102 extending substantially parallel to the sidewall 22. The body 104 extends buccally away from sidewall 22 such that the projection 102 is spaced from the sidewall 22 to create a recess 106. As shown, the projection 102 extends in a gingival direction. However, embodiments are not limited to the orientation shown. For example, the projection 102 may extend distally, mesially, or occlusally from the body 104 with the elastic member 40 being stretched in generally the opposite direction when attached as described below. Generally, the projection 102 is positioned on the body 104 on the same side as the direction in which the body 104 extends from the shell 12. This ensures that the elastic member 40 remains securely fastened to the aligner 10 when the elastic member 40 is stretched during use. In some embodiments, the projection 102 is curved concavely relative to the sidewall 22 while the hook 100 is attached to the shell 12 (not shown).

With reference to FIG. 7B, the projection 102 may include a retention bump 105 that extends from the projection 102 toward the recess 106. In such embodiments, the retention bump 105 may be configured to enable secure attachment of the elastic 40 to the aligner 10 between the body 104 and the retention bump 105.

With reference to FIGS. 7A and 7B, the elastic member 40 is attached to the hook 100 with a portion of the elastic 40 received in the recess 106 and another portion of the elastic 40 is extended in a direction generally opposite to the projection 102. Advantageously, the elastic 40 is securely attached to the hook 100 at a location that is spaced-apart from the edge 16 of aligner 10. Thus, forces produced by the elastic 40 when it is elastically stretched, such as when it is attached to a separate location at another position in the patient's mouth, are transferred to the sidewall 22 via the hook 100 and are efficiently and safely distributed to the aligner 10. Additionally, the forces produced by the elastic member 40 are distributed in an area around the protrusion 32 thereby avoiding subjecting the edge 16 or any portion thereof to direct loads from the stretched elastic 40. In this way, treatment of the patient's malocclusion may be hastened or otherwise improved by the elastic 40 with a decreased risk of premature failure of the aligner 10, 11 at or near the gingival edge 16 due to the added loading.

Embodiments which are not part of the invention are not limited to the elastic 40 being attached to a single add-on hook 100 of aligner 10. Although not shown, the aligner 11 may include an add-on hook configured to attach to the elastic 40 as described above. In some such embodiments, the elastic 40 may be attached to the hook 100 on aligner 10 and a second hook on aligner 11. In this way, the elastic 40 may be stretched between aligners 10, 11 so that additional forces may be applied to one or more teeth 13 on both the mandible jaw 26 and the maxillary jaw 28. Embodiments are not limited to a single add-on hook 80 per aligner. In that regard, both the aligners 10, 11 may include a plurality of hooks 100 as described above, and each of a plurality of the elastic members 40 may be attached to an add-on hook on both the aligners 10, 11 (not shown). In this way, additional forces may be applied to the patient's jaws 26, 28. Treatment of the patient's malocclusion may be further hastened or otherwise further improved by the use of an elastic 40 to apply a greater corrective force to the patient's dentition or additional corrective forces to the patient's dentition as disclosed above.

Referring generally to FIGS. 1-7B, a pair of aligners 10, 11 may include at least two different types of features 30. That is, the orthodontist may mix and match the features 30 though this may depend on the patient's treatment plan. For example, one feature 30, such as that shown in FIGS. 1-3B, may be incorporated into the design of the aligner and so be preplanned. If needed and not initially designed, an orthodontist may modify an existing aligner at the office with feature 30 shown in one of FIGS. 4-7B so that an elastic member may be utilized during treatment. By way of additional example, the pair of aligners 10, 11 may include the elastic member 40 that attaches to a first feature 30 using a hook 42 as disclosed in FIGS. 1-3B and a second feature 30 as disclosed in FIGS. 4 and 5. As another example, the pair of aligners 10, 11 may include an elastic 40 that attaches to a first feature 30 using a hook 42 as disclosed in FIGS. 1-3B and a second feature 30 as disclosed in FIGS. 6A-6C. And, by way of further example, the pair of aligners 10, 11 may include an elastic 40 that attaches to a first feature 30 using a hook 42 as disclosed in FIGS. 1-3B and a second feature 30 as disclosed in FIGS. 7A and 7B. Treatment of the patient's malocclusion may be hastened or otherwise improved by the use of elastics to apply a greater corrective force to the patient's dentition as disclosed above. Embodiments in which the elastic 40 is attached to at least two different types of features 30 disclosed above are not limited to embodiments where the elastic 40 includes the hook 42. Although these embodiments disclosed are not shown, they are readily understood by those skilled in the art as combinations of the elements disclosed above. For example, the pair of aligners 10, 11 may include the elastic member 40 that attaches to a first feature 30 as disclosed in FIGS. 4 and 5 and a second feature 30 as disclosed in FIGS. 6A-6C. Alternatively, the pair of aligners 10, 11 may include an elastic 40 that attaches to a first feature 30 as disclosed in FIGS. 4 and 5 and a second feature 30 as disclosed in FIGS. 7A and 7B. In some embodiments, the pair of aligners 10, 11 may include an elastic 40 that attaches to a first feature 30 as disclosed in FIGS. 6A-6C and a second feature 30 as disclosed in FIGS. 7A and 7B. Treatment of the patient's malocclusion may be hastened or otherwise improved by the use of elastics to apply a greater corrective force to the patient's dentition as disclosed above.

With further reference to FIGS. 1-7B, embodiments of dental aligners 10, 11 are not limited to one or more feature 30 on the buccal sidewall 22. Aligners 10, 11 according to the present invention may include one or more feature 30 on the lingual sidewall 24 (not shown). In such embodiments, the elastic member 40 may be configured to attach to a feature 30 on the lingual sidewall 24 of aligner 10 and the lingual sidewall 24 of aligner 11. In embodiments with one or more feature 30 on a lingual sidewall 24, the feature 30 may include one of the following: a projection, similar to projection 32 shown in FIGS. 1-3B, that extends lingually; a through-bore, similar to the through-bore 60 shown in FIGS. 4 and 5; an add-on hook and a protrusion, similar to the add-on hook 80 and protrusion 81 shown in FIGS. 6A-6C, where the protrusion extends lingually; and an add-on hook with a body, similar to the add-on hook100 with a body 104 shown in FIGS. 7A and 7B, where the body extends lingually.

While the present invention has been illustrated by the description of one or more embodiments thereof, and while the embodiments have been described in considerable detail, they are not intended to restrict or in any way limit the scope of the appended claims to such detail. The various aspects of the invention shown and described herein may be used alone or in any combination. Additional advantages and modifications will readily appear to those skilled in the art.

## Claims

1. A dental aligner (11) for use in orthodontic treatment of a patient comprising:
a hollow shell (12) having a buccal sidewall (22), an occlusal wall (20), and a lingual sidewall (24), and defining a plurality of cavities to receive respective ones of the patient's teeth, the sidewalls defining a gingival edge (16) that forms an opening in the hollow shell; and
a feature (30) that is positioned on or in at least one of the sidewalls, is spaced apart from the gingival edge (16), and is configured to receive an elastic member (40),
wherein the feature comprises:
a protrusion (81) in the at least one sidewall that at least partially defines the cavity, the protrusion being configured to space the sidewall apart from the patient's tooth, and
an add-on hook (80) including a projection (82) spaced apart from the sidewall thereby defining a recess (86) between the projection and the sidewall.

2. The aligner of claim 1, wherein the protrusion is configured to engage with a dental attachment on the patient's tooth.

3. The aligner of claim 1 or claim 2, wherein the projection comprises a retention bump extending into the recess that is configured to retain the elastic member in the recess.

4. The aligner of one of claims 1-3, wherein the projection is curved concavely relative to the sidewall.

5. The aligner of one of claims 1-4, wherein the add-on hook is a separate component that is adhesively attached to the protrusion.

6. The aligner of one of claims 1-4, wherein the add-on hook is a separate component that is welded to the sidewall.

7. The aligner of one of claims 1-6, wherein the projection extends substantially parallel to the buccal sidewall from the buccal protrusion and is pointed in substantially gingival direction from the protrusion and so is between the edge and the protrusion.

8. The aligner of any preceding claim, wherein when an elastic member is attached to the feature, the aligner is configured to apply a greater repositioning force than the aligner alone to the respective ones of patient's teeth or the patient's jaw.

9. A dental assembly comprising the aligner of claim 1 further comprising:
an elastic member that is configured to attach to the feature.

10. The dental assembly of claim 9, wherein the elastic member comprises a hook that attaches the elastic member to the feature.

## Patentansprüche

1. Zahnärztlicher Aligner (11) zur Verwendung bei der orthodontischen Behandlung eines Patienten, umfassend:
eine hohle Schale (12), die eine bukkale Seitenwand (22), eine okklusale Wand (20) und eine linguale Seitenwand (24) aufweist und
einer Vielzahl von Hohlräumen definiert, um jeweilige Zähne des Patienten aufzunehmen, wobei die Seitenwände eine Zahnfleischkante (16) definieren, die eine Öffnung in der hohlen Schale bildet; und
ein Merkmal (30), das an oder in mindestens einer der Seitenwände positioniert ist, von der Zahnfleischkante (16) beabstandet ist und dazu konfiguriert ist, ein elastisches Element (40) aufzunehmen,
wobei das Merkmal Folgendes umfasst:
einen Vorsprung (81) in der mindestens einen Seitenwand, der mindestens teilweise den Hohlraum definiert, wobei der Vorsprung dazu konfiguriert ist, die Seitenwand von dem Zahn des Patienten zu beabstanden, und einen Anbauhaken (80), der einen Fortsatz (82) beinhaltet, der von der Seitenwand beabstandet ist, wodurch eine Aussparung (86) zwischen dem Fortsatz und der Seitenwand definiert wird.

2. Aligner nach Anspruch 1, wobei der Vorsprung dazu konfiguriert ist, mit einer Zahnbefestigung am Zahn des Patienten in Eingriff zu treten.

3. Aligner nach Anspruch 1 oder Anspruch 2, wobei der Fortsatz eine Rückhalteerhebung umfasst, die sich in die Aussparung erstreckt, die dazu konfiguriert ist, das elastische Element in der Aussparung zurückzuhalten.

4. Aligner nach einem der Ansprüche 1-3, wobei der Fortsatz relativ zu der Seitenwand konkav gekrümmt ist.

5. Aligner nach einem der Ansprüche 1-4, wobei der Anbauhaken eine separate Komponente ist, die klebend an dem Vorsprung befestigt ist.

6. Aligner nach einem der Ansprüche 1-4, wobei der Anbauhaken eine separate Komponente ist, die an die Seitenwand geschweißt ist.

7. Aligner nach einem der Ansprüche 1-6, wobei sich der Fortsatz im Wesentlichen parallel zu der bukkalen Seitenwand von dem bukkalen Vorsprung aus erstreckt und in im Wesentlichen Zahnfleischrichtung von dem Vorsprung aus gerichtet ist und sich somit zwischen der Kante und dem Vorsprung befindet.

8. Aligner nach einem vorhergehenden Anspruch, wobei, wenn ein elastisches Element an dem Merkmal befestigt ist, der Aligner dazu konfiguriert ist, eine größere Repositionierungskraft als der Aligner allein auf die jeweiligen Zähne des Patienten oder den Kiefer des Patienten auszuüben.

9. Zahnärztliche Anordnung, die den Aligner nach Anspruch 1 umfasst, ferner umfassend: ein elastisches Element, das dazu konfiguriert ist, an dem Merkmal befestigt zu sein.

10. Zahnärztliche Anordnung nach Anspruch 9, wobei das elastische Element einen Haken umfasst, der das elastische Element an dem Merkmal befestigt.

## Revendications

1. Aligneur dentaire (11) destiné à être utilisé dans le traitement orthodontique d'un patient comprenant :
une coque creuse (12) possédant une paroi latérale buccale (22), une paroi occlusale (20) et une paroi latérale linguale (24), et
la définition d'une pluralité de cavités destinées à recevoir les dents respectives du patient, les parois latérales définissant un bord gingival (16) qui forme une ouverture dans la coque creuse ; et
un élément (30) qui est positionné sur ou dans au moins l'une des parois latérales, est espacé du bord gingival (16), et est conçu pour recevoir un élément élastique (40),
ledit élément comprenant :
une saillie (81) dans ladite au moins une paroi latérale qui définit au moins partiellement la cavité, la saillie étant conçue pour espacer la paroi latérale de la dent du patient, et
un crochet supplémentaire (80) comprenant une saillie (82) espacée de la paroi latérale définissant ainsi un évidement (86) entre la saillie et la paroi latérale.

2. Aligneur selon la revendication 1, ladite saillie étant conçue pour venir en prise avec un dispositif de fixation dentaire sur la dent du patient.

3. Aligneur selon la revendication 1 ou la revendication 2, ladite saillie comprenant une bosse de retenue s'étendant dans l'évidement qui est conçue pour retenir l'élément élastique dans l'évidement.

4. Aligneur selon l'une quelconque des revendications 1 à 3, ladite saillie étant incurvée de manière concave par rapport à la paroi latérale.

5. Aligneur selon l'une quelconque des revendications 1 à 4, ledit crochet supplémentaire étant un composant distinct qui est fixé de manière adhésive à ladite saillie.

6. Aligneur selon l'une quelconque des revendications 1 à 4, ledit crochet supplémentaire étant un composant distinct qui est soudé à la paroi latérale.

7. Aligneur selon l'une quelconque des revendications 1 à 6, ladite saillie s'étendant de manière sensiblement parallèle à la paroi latérale buccale à partir de la saillie buccale et étant pointée dans une direction sensiblement gingivale à partir de la saillie et se trouvant ainsi entre le bord et la saillie.

8. Dispositif d'alignement selon l'une quelconque des revendications précédentes, lorsqu'un élément élastique est fixé à l'élément, ledit aligneur étant conçu pour appliquer une force de repositionnement supérieure à celle de l'aligneur seul sur les dents respectives du patient ou sur la mâchoire du patient.

9. Ensemble dentaire comprenant l'aligneur selon la revendication 1, comprenant en outre :
un élément élastique qui est conçu pour se fixer à l'élément.

10. Ensemble dentaire selon la revendication 9, ledit élément élastique comprenant un crochet qui fixe l'élément élastique à l'élément.
